# DEMANDE DE BREVET EUROPEEN

(11) **EP 0 751 305 A1**
(43) Date de publication de la demande: **02.01.1997**
(21) Numéro de dépôt: 96401403.9
(22) Date de dépôt: 25.06.1996
(51) Int. Cl.: F16B 5/02, F16B 29/00, F16B 41/00, B60S 1/04, F16F 1/373

(54) **Dispositif pour la fixation d'un élément appartenant à un mécanisme d'essuie-glace sur la caisse d'un véhicule automobile**

(30) Priorité: 26.06.1995 FR 9508218
(71) Demandeur: VALEO SYSTEMES D'ESSUYAGE, 78321 La Verrière (FR)
(72) Inventeur: Basmaison, Frédéric, 86100 Chatellerault (FR)
(74) Mandataire: Gamonal, Didier

(57) **Abrégé**

L'invention concerne un dispositif (10) du type comportant une vis (12) dont le corps (22) traverse un trou formé dans une tôle (46) de la caisse du véhicule avec interposition d'un manchon d'amortissement (16) en matériau déformable élastiquement qui, en position serrée du dispositif, est comprimé axialement entre une surface radiale annulaire d'appui (32) associée à la vis (12) et une face en vis-à-vis (47) de la tôle (46), et du type dans lequel une entretoise (18) de serrage est agencée axialement entre la surface radiale d'appui (32) et la face en vis-à-vis (47) de la tôle, caractérisé en ce que, avant la fixation de l'élément (44), le manchon d'amortissement (16) et l'entretoise (18) sont retenus axialement (X-X) par rapport au corps (22) de la vis (12) pour constituer un ensemble de composants imperdables.

## Description

La présente invention concerne un dispositif pour la fixation d'un élément sur la caisse d'un véhicule automobile.

L'invention concerne notamment un dispositif pour la fixation d'un élément appartenant à un mécanisme d'essuie-glace tel que par exemple une platine de support du mécanisme.

L'invention concerne un dispositif de fixation du type comportant une vis dont le corps traverse un trou formé dans une tôle de la caisse du véhicule avec interposition d'un manchon d'amortissement en matériau déformable élastiquement qui, en position serrée du dispositif dans laquelle l'extrémité filetée du corps de la vis est montée vissée dans un écrou fixé sur la tôle ou monté dans une cage de maintien elle-même fixée sur la tôle, est comprimé axialement entre une surface radiale annulaire d'appui associée à la vis et une face en vis-à-vis de la tôle, et du type dans lequel une entretoise de serrage est agencée axialement entre la surface radiale d'appui et la face en vis-à-vis de la tôle.

Une telle conception d'un dispositif de fixation permet, à l'issue des opérations de serrage, d'assurer le positionnement et la fixation de l'élément par rapport à la caisse du véhicule et le montage de celui-ci avec interposition d'un moyen élastique d'amortissement des vibrations constituées par le manchon d'amortissement.

Selon une conception connue, les principaux composants du dispositif de fixation, c'est-à-dire la vis, le manchon d'amortissement et la douille sont réalisés sous la forme d'éléments distincts qui doivent être mis en place les uns par rapport aux autres, le manchon d<'amortissement devant également être mis en place dans un trou correspondant de l'élément à fixer.

Dans la plupart des cas, le dispositif comporte également une rondelle de serrage interposée entre la tête de la vis et une face radiale en vis-à-vis du manchon d'amortissement.

Une telle conception d'un dispositif de fixation fait donc appel à de très nombreux composants distincts dont l'assemblage est complexe et difficile à automatiser, le maintien ensemble des différentes pièces n'étant pas assuré pendant le transport et la manutention de l'élément à fixer ce qui aboutit parfois à la perte de certaines pièces et à des ralentissements des cadences de productions en chaîne.

Afin de remédier à ces inconvénients, l'invention propose un dispositif de fixation du type mentionné précédemment, caractérisé en ce que, avant la fixation de l'élément, le manchon d'amortissement et l'entretoise sont retenus axialement par rapport au corps de la vis pour constituer un ensemble de composants imperdables.

Selon d'autres caractéristiques de l'invention
- l'entretoise est réalisée sous la forme d'une douille coaxiale au manchon d'amortissement qui est montée serrée radialement à l'intérieur du manchon d'amortissement ;
- le manchon d'amortissement et la douille formant entretoise constituent un sous-ensemble qui est retenu axialement par rapport au corps de la vis ;
- le manchon d'amortissement est retenu axialement par rapport au corps de la vis ;
- la surface radiale d'appui appartient à une rondelle de serrage, interposée entre la tête de la vis et le manchon d'amortissement, qui est retenue axialement sur le corps de la vis entre la tête et le tronçon fileté de cette dernière, et le manchon d'amortissement est retenu axialement par rapport à la rondelle ;
- le manchon d'amortissement comporte un logement qui reçoit la rondelle ;
- la rondelle est susceptible de se déplacer axialement à l'intérieur du logement ;
- le logement débouche dans une face radiale d'extrémité du manchon d'amortissement, et la rondelle est introduite axialement dans le logement par déformation élastique de la face radiale ouverte d'extrémité du manchon d'amortissement ;
- le corps de la vis est reçu radialement avec jeu dans le manchon d'amortissement, et la rondelle est susceptible de se déplacer radialement à l'intérieur du logement ;
- l'une des faces radiales d'extrémité du manchon d'amortissement comporte une lèvre de retenue qui s'étend radialement vers l'intérieur et qui coopère avec le corps de la vis ;
- le corps de la vis est reçu radialement avec jeu dans l'alésage du manchon, et la lèvre de retenue est susceptible de se déformer radialement ;
- la douille formant entretoise comporte, à l'une de ses extrémités axiales, une collerette qui s'étend radialement vers l'extérieur et qui est interposée axialement entre le manchon d'amortissement et la face en vis-à-vis de la tôle ;
- la collerette de la douille est reçue dans un évidement formé dans la face radiale d'extrémité en vis-à-vis du manchon d'amortissement ;
- le tronçon central du manchon d'amortissement comporte une gorge radiale interne pour le montage du manchon d'amortissement dans un trou formé dans une partie en forme de plaque appartenant à l'élément à fixer.

D'autres caractéristiques et avantages de l'invention apparaîtront à la lecture détaillée qui va suivre pour la compréhension de laquelle on se reportera aux dessins annexés dans lesquels :
- la figure 1 est une vue en perspective éclatée des principaux composants appartenant à un premier mode de réalisation d'un dispositif de fixation conforme aux enseignements de l'invention ;
- la figure 2 est une vue en section axiale du dispositif de fixation de la figure 1 qui est illustrée en position avant serrage ;
- la figure 3 est une vue similaire à celle de la figure 2 sur laquelle le dispositif de fixation est illustré en position montée et serrée ;
- la figure 4 est une vue en section selon la ligne 4-4 de la figure 3 ;
- les figures 5 à 7 sont des vues similaires à celles des figures 2 à 4 qui illustrent un deuxième mode de réalisation d'un dispositif de fixation selon l'invention;
- les figures 8 et 9 sont des vues similaires à celles des figures 2 et 3 qui illustrent un troisième mode de réalisation d'un dispositif de fixation selon l'invention; et
- la figure 10 est une vue en coupe axiale d'un élément du mode de réalisation selon les figures 8 et 9.

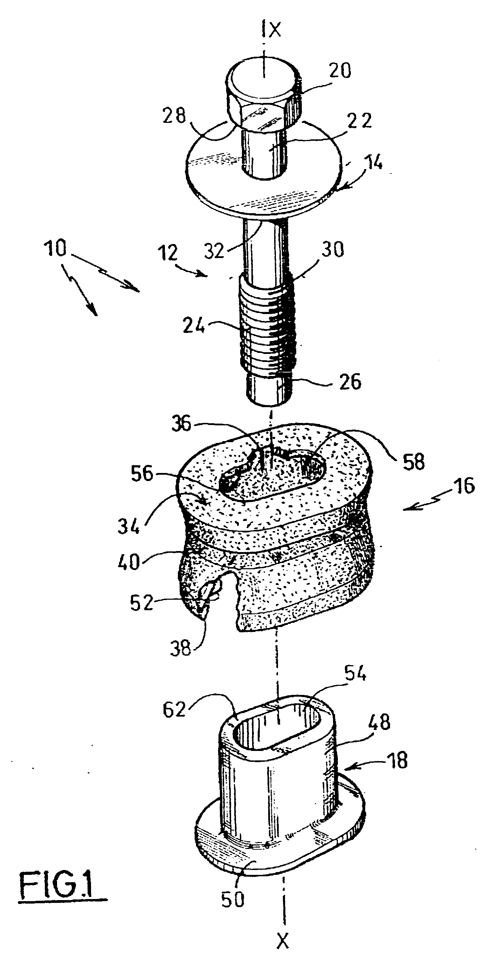

Le dispositif de fixation 10 illustré sur la figure 1 est constitué pour l'essentiel par une vis de serrage 12 qui porte une rondelle de serrage imperdable 14, par un manchon 16 d'amortissement en matériau élastomère déformable élastiquement et par une entretoise métallique 18 en forme générale de douille.

La vis 14 comporte une tête d'entraînement 20 qui se prolonge axialement par un corps en forme de tige 22 dont un tronçon inférieur de plus grand diamètre 24 est fileté et qui se termine axialement par un embout cylindrique 26.

La rondelle imperdable 14 est susceptible de coulisser le long du corps cylindrique 22 entre la face radiale inférieure de serrage 28 de la tête 20 et le filet supérieur 30 du tronçon fileté 24.

La face radiale inférieure 32 de la rondelle 14 constitue une surface radiale annulaire d'appui qui est prévue pour coopérer avec la face radiale supérieure 34 du manchon d'amortissement 16.

Le manchon 16 est une pièce moulée de forme générale cylindrique à contour oblong qui comporte un alésage interne traversant 36 de section oblongue et qui s'étend depuis la face supérieure 34 jusqu'à la face inférieure 38.

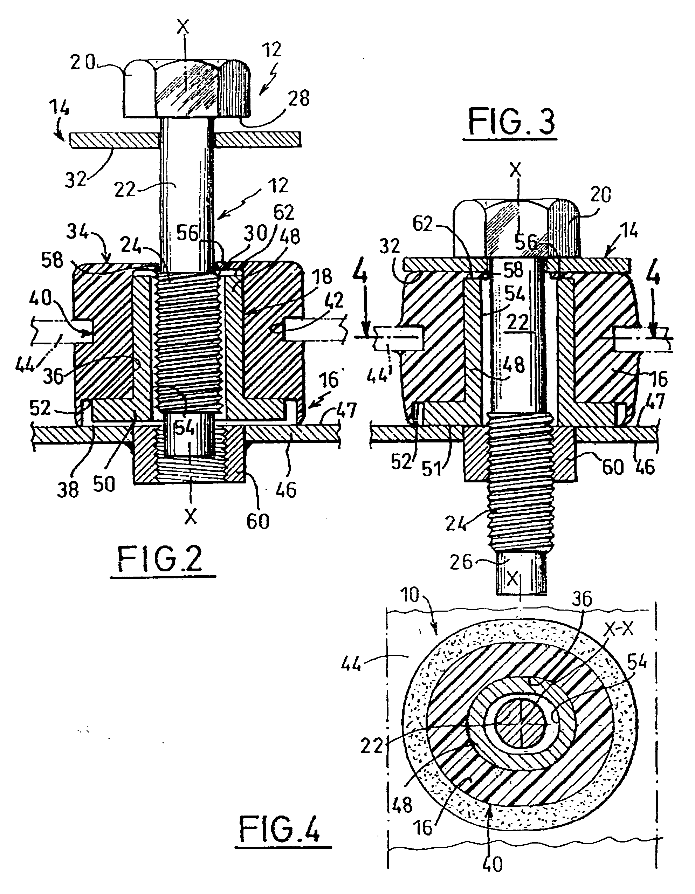

La partie centrale du corps du manchon d'amortissement 16 comporte une gorge radiale interne périphérique 40 qui est prévue pour permettre le montage du manchon d'amortissement 16 dans un trou de forme complémentaire 42 formé dans une partie en forme de plaque 44 appartenant à un élément que l'on désire fixer sur une tôle 46 de la caisse d'un véhicule automobile (voir figure 2 et 3).

L'entretoise 18 comporte un corps 48 en forme générale de douille de profil oblong complémentaire de celui de l'alésage 36 et qui se prolonge à son extrémité inférieure par une collerette radiale extérieure 50.

Conformément à un premier aspect de l'invention, les dimensions extérieures du corps 48 sont supérieures aux dimensions correspondantes de l'alésage oblong 36 de manière que, lorsque la douille 18 est introduite dans l'alésage 36, elle soit montée serrée à l'intérieur du manchon d'amortissement 16 pour être retenue à l'intérieur de ce dernier.

Comme on peut le voir sur les figures 2 et 3, la face inférieure 38 du manchon d'amortissement 16 comporte un évidement 52 prévu pour recevoir la collerette 50 de l'entretoise 18.

Les dimensions de l'alésage interne oblong 54 de l'entretoise 18 sont telles que le corps 22 de la vis 12, de même que son tronçon fileté 14, y est reçu avec une possibilité de déplacement radial selon la plus grande dimension de l'alésage oblong 54, en vue de faciliter le positionnement de l'élément à fixer par rapport à la caisse du véhicule.

Afin d'assurer la retenue axiale, selon l'axe X-X, du sous-ensemble constitué par le manchon d'amortissement 16 dans lequel l'entretoise 18 a préalablement été montée, le manchon d'amortissement 16 comporte une lèvre de retenue 56 qui est réalisée venue de matière avec le manchon 16.

Plus précisément, la lèvre 56 s'étend radialement vers l'intérieur, dans le plan de la face supérieure 34, depuis la paroi de l'alésage interne oblong 36 du manchon d'amortissement 16.

La largeur qui sépare les bords longitudinaux en vis-à-vis de l'ouverture centrale 58 délimitée par la lèvre 56 est inférieure au diamètre du corps cylindrique 22 de la vis 12 et de préférence à celui du tronçon fileté 24 de manière à assurer la retenue du manchon d'amortissement 16 le long de la vis 12 lorsque les composants sont dans la position illustrés sur la figure 2.

Ainsi, le dispositif de fixation 10 constitue un ensemble de composants mobiles axialement les uns par rapport aux autres lors des opérations de serrage, mais qui sont imperdables avant le serrage du dispositif, cet ensemble pouvant être mis en place dans le trou 42 de la plaque 44, qui appartient par exemple à une platine d'un mécanisme d'essuie-glace, la plaque 44 à fixer sur la tôle 46 pouvant ensuite être déplacé avec son ou ses dispositifs de fixation 10 sans risque de perdre les composants de ces dispositifs de fixation.

Le serrage du dispositif de fixation s'effectue, en partant de la position illustrée sur la figure 2 en vissant le tronçon fileté 24 de la vis 12 dans un écrou 60 fixé sur la tôle 46.

L'opération de vissage aboutit à un serrage axial progressif du manchon d'amortissement 16 entre la face radiale inférieure d'appui 32 de la rondelle 14 et la face en vis à vis 47 de la tôle 46.

L'opération de serrage se poursuit jusqu'à ce que le bord annulaire d'extrémité supérieure 62 de l'entretoise 18 vienne en appui contre la surface d'appui 32 de la rondelle 14, tandis que la face inférieure 51 de la collerette 50 est en appui axial contre la face en vis-à-vis 47 de la tôle 46.

Lors du serrage, la lèvre 56 de retenue, de très faible épaisseur, est écrasée entre les surfaces 62 et 32.

Lors du serrage, les composants sont susceptibles de se déplacer axialement l'un par rapport à l'autre sans modifier la position de serrage étant donnés les faibles efforts de retenue axiale assurés par la lèvre de retenue 56 et par le montage serré de l'entretoise 18 dans le manchon d'amortissement 16.

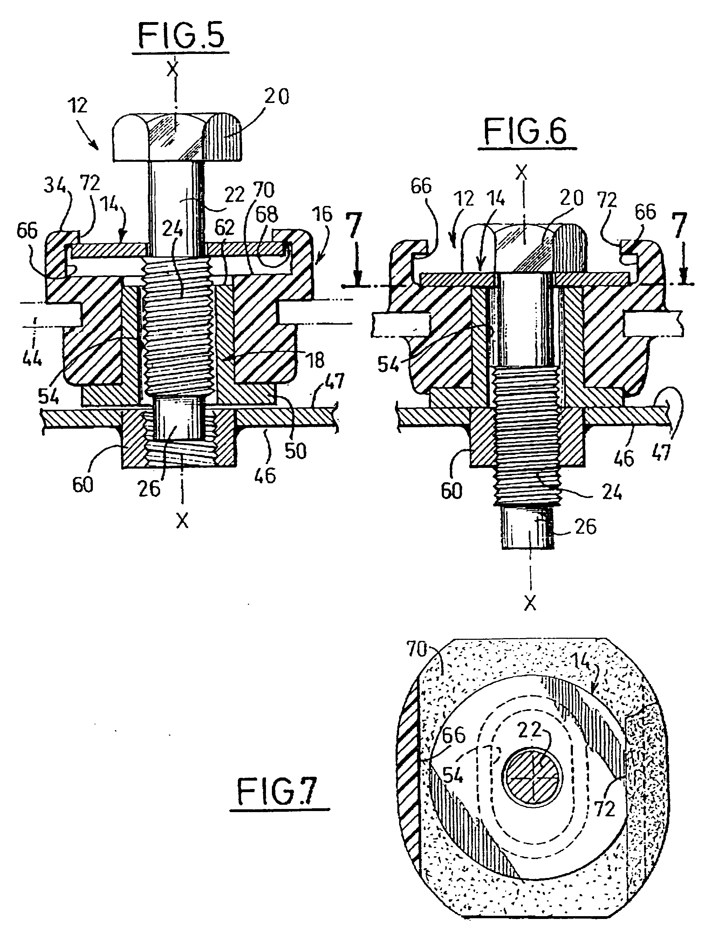

On décrira maintenant le second mode de réalisation illustré aux figures 5 à 7 sur lesquelles des composants identiques ou similaires sont désignés par les mêmes chiffres de référence.

Dans ce mode de réalisation, la rondelle imperdable 14 est reçue dans un logement 66 formé dans le corps en matériau élastomère du manchon d'amortissement 16.

Le logement 66 est de forme générale annulaire allongée et il est délimité axialement par deux surfaces parallèles et opposées 68 et 70 espacées axialement de façon à permettre des déplacements axiaux de la rondelle 14 par rapport au manchon 16.

Le logement 66 débouche dans l'alésage oblong 36 et il débouche également dans la face supérieure 34 du manchon d'amortissement 16 par une découpe 72 permettant l'introduction de la rondelle 14 dans le logement 66 par déformation de la paroi de faible épaisseur délimitée par les surfaces 34 et 68.

Comme on peut le voir sur les figures 5 et 6, la dimension du logement 66 est également nettement supérieure au diamètre de la rondelle 14 de manière à permettre un déplacement radial relatif de la vis 12 avec sa rondelle 14 par rapport au manchon d'amortissement 16 selon la plus grande direction de l'alésage oblong 54.

Dans ce deuxième mode de réalisation, la face inférieure 38 du manchon d'amortissement 16 ne comporte pas d'évidement et la collerette 50 de l'entretoise 18 est interposée entre la face radiale inférieure 38 et la face en vis-à-vis 47 de la tôle 46.

Comme on peut le voir sur la figure 6, à l'issue du serrage, le corps du manchon d'amortissement 16 est monté comprimé entre la face inférieure 32 de la rondelle 14, qui coopère avec la surface 70 de l'évidement 66, et la face 47 de la tôle 46.

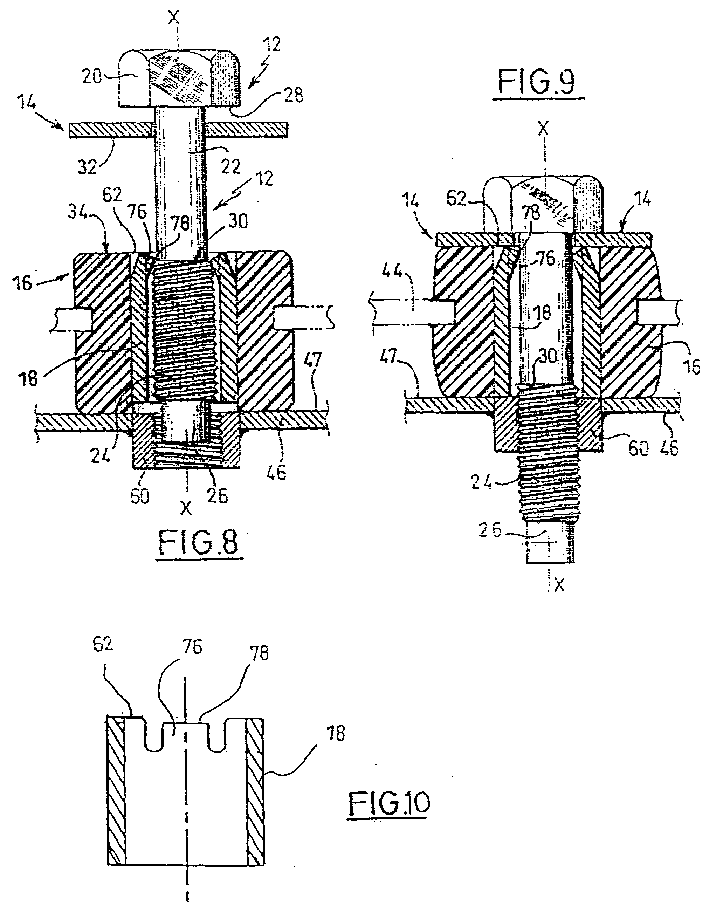

On décrira maintenant le troisième mode de réalisation illustré aux figures 8 à 10 sur lesquelles les composants identiques ou similaires à ceux décrits précédemment sont désignés par les mêmes chiffres de référence.

Dans ce mode de réalisation, le sous ensemble constitué par le manchon d'amortissement 16 et l'entretoise 18 est retenu axialement le long du corps 22 de la vis 12 par l'intermédiaire de l'entretoise 18 qui comporte elle-même des moyens pour la retenir par rapport à la vis 12.

La douille 18 ne comporte pas de collerette inférieure 50 et elle comporte des pattes 76, réalisées venues de matière par découpage et pliage depuis son bord annulaire supérieur 62 qui sont resserrées radialement vers l'intérieur et dont le bord libre d'extrémité 78 est reçu entre le filet supérieur 30 du tronçon fileté 24 et la face inférieure 32 de la rondelle.

Le serrage du dispositif 10 s'effectue comme dans le cas des deux précédents modes de réalisation.

Pour réaliser l'ensemble imperdable que constitue le dispositif de fixation 10 illustré au troisième mode de réalisation, la vis 22 est introduite par vissage entre les pattes 76 de l'entretoise 18 qui a été préalablement montée serrée dans l'alésage oblong 36 du manchon d'amortissement 16.

## Revendications

1. Dispositif (10) pour la fixation d'un élément (44) sur la caisse (46) d'un véhicule automobile, notamment pour la fixation d'un élément appartenant à un mécanisme d'essuie-glace, du type comportant une vis (12) dont le corps (22) traverse un trou formé dans une tôle (46) de la caisse du véhicule avec interposition d'un manchon d'amortissement (16) en matériau déformable élastiquement qui, en position serrée du dispositif, est comprimé axialement entre une surface radiale annulaire d'appui (32) associée à la vis (12) et une face en vis-à-vis (47) de la tôle (46), et du type dans lequel une entretoise (18) de serrage est agencée axialement entre la surface radiale d'appui (32) et la face en vis-à-vis (47) de la tôle, caractérisé en ce que, avant la fixation de l'élément (44), le manchon d'amortissement (16) et l'entretoise (18) sont retenus axialement (X-X) par rapport au corps (22) de la vis (12) pour constituer un ensemble de composants imperdables.

2. Dispositif selon la revendication 1, caractérisé en ce que l'entretoise (18) est réalisée sous la forme d'une douille (48) coaxiale au manchon d'amortissement (16) qui est montée serrée radialement à l'intérieur (36) du manchon d'amortissement (16).

3. Dispositif selon la revendication 2, caractérisé en ce que le manchon d'amortissement (16) et la douille formant entretoise (18, 48) constituent un sous-ensemble qui est retenu axialement par rapport au corps (22) de la vis (16).

4. Dispositif selon l'une des revendications 1 à 3, caractérisé en ce que l'entretoise (18) est retenue axialement par rapport au corps (22) de la vis (12).

5. Dispositif selon la revendication 4, caractérisé en ce que l'entretoise (18) comporte des pattes (76) resserrées radialement vers l'intérieur et qui coopèrent avec le corps (22) de la vis (12).

6. Dispositif selon l'une des revendications 1 à 3, caractérisé en ce que le manchon d'amortissement (16) est retenu axialement par rapport au corps (22) de la vis (12).

7. Dispositif selon la revendication 6, caractérisé en ce que la surface radiale d'appui (32) appartient à une rondelle (14) de serrage, interposée entre la tête (20) de la vis (12) et le manchon d'amortissement (16), qui est retenue axialement sur le corps (22) de la vis (12) entre la tête (20) et le tronçon fileté (24) de cette dernière, et en ce que le manchon d'amortissement (16) est retenu axialement par rapport à la rondelle (14).

8. Dispositif selon la revendication 7, caractérisé en ce que le manchon d'amortissement (16) comporte un logement (66) qui reçoit la rondelle (14).

9. Dispositif selon la revendication 8, caractérisé en ce que la rondelle (14) est susceptible de se déplacer axialement à l'intérieur du logement (66).

10. Dispositif selon l'une des revendications 8 ou 9, caractérisé en ce que le logement (66) débouche dans une face radiale d'extrémité (34) du manchon d'amortissement (16), et en ce que la rondelle (14) est introduite axialement dans le logement (66) par déformation élastique de la face radiale ouverte (72) d'extrémité du manchon d'amortissement (16).

11. Dispositif selon l'une quelconque des revendications 8 à 10, caractérisé en ce que le corps (22) de la vis (12) est reçu, radialement avec jeu dans le manchon d'amortissement (16), et en ce que la rondelle (14) est susceptible de se déplacer radialement à l'intérieur du logement (66).

12. Dispositif selon la revendication 6, caractérisé en ce que l'une (34) des faces radiales d'extrémité (34, 38) du manchon d'amortissement (16) comporte une lèvre de retenue (56) qui s'étend radialement vers l'intérieur et qui coopère avec le corps (22) de la vis (12).

13. Dispositif selon la revendication 12, caractérisé en ce que le corps (22) de la vis (12) est reçu radialement avec jeu dans l'alésage du manchon, et en ce que la lèvre de retenue (56) est susceptible de se déformer radialement.

14. Dispositif selon l'une quelconque des revendications 2 à 13, caractérisé en ce que la douille (18, 48) formant entretoise comporte, à l'une de ses extrémités axiales, une collerette (50) qui s'étend radialement vers l'extérieur et qui est interposée axialement entre le manchon d'amortissement (16, 38) et la face en vis-à-vis (47) de la tôle (46).

15. Dispositif selon la revendication 14, caractérisé en ce que la collerette (40) de la douille (18,48) est reçue dans un évidement (52) formé dans la face radiale d'extrémité (38) en vis-à-vis du manchon d'amortissement.

16. Dispositif selon l'une quelconque des revendications précédentes, caractérisé en ce que le tronçon central du manchon d'amortissement (16) comporte une gorge radiale interne (40) pour le montage du manchon d'amortissement (16) dans un trou (42) formé dans une partie en forme de plaque (44) appartenant à l'élément à fixer
